# EUROPÄISCHE PATENTSCHRIFT

(11) **EP 0 968 219 B1**
(45) Veröffentlichungstag und Bekanntmachung des Hinweises auf die Patenterteilung: **17.07.2002**
(21) Anmeldenummer: 98905294.9
(22) Anmeldetag: 14.01.1998
(51) Int. Cl.: C07F 9/50

(54) **Guanidiniumphosphane, ihre Herstellung und ihre Verwendung**
Guanidinium phosphanes, their production and their use
Phosphanes de guanidinium, leur fabrication et leur utilisation

(30) Priorität: 16.01.1997 DE 19701245
(43) Veröffentlichungstag der Anmeldung: 05.01.2000
(73) Patentinhaber: Celanese Chemicals Europe GmbH, 60439 Frankfurt am Main (DE)
(72) Erfinder: STELZER, Othmar, D-42349 Wuppertal (DE); SCHMIDTCHEN, Franz, Peter, D-85386 Eching (DE); HESSLER, Antonella, D-42329 Wuppertal (DE); TEPPER, Michael, D-42105 Wuppertal (DE); DIBOWSKI, Harald, D-85386 Eching (DE); BAHRMANN, Helmut, D-46499 Hamminkeln (DE); RIEDEL, Michael, Bay City, TX 77414 (US)
(86) Internationale Anmeldenummer: EP9800181
(87) Internationale Veröffentlichungsnummer: WO9831694

(56) Entgegenhaltungen:
- DE-A- 3 840 600
- DIBOWSKI H ET AL: "Synthesis and Investigation of Phosphine Ligands Containing Cationic Guanidino Functions in Aqueous Heck Reactions" TETRAHEDRON, Bd. 8, Nr. 51, 20.Februar 1995, Seite 2325-2330 XP004104806 in der Anmeldung erwähnt
- A. HESSLER ET AL.: "Water soluble cationic phosphine ligands containing m-guanidinium phenyl moieties." JOURNAL OF ORGANIC CHEMISTRY., Bd. 62, Nr. 8, - 18.April 1997 EASTON US, Seiten 2362-2369, XP002065163

## Beschreibung

Die Erfindung betrifft Guanidiniumphosphane, ein Verfahren zu ihrer Herstellung und ihre Verwendung.

Für eine Reihe von Reaktionen ist Wasser als Lösungsmittel für die chemische Industrie von großem Interesse Organische Reaktionen haben jedoch vielfach den Nachteil, in wäßrigen Systemen nicht oder nur unzureichend abzulaufen Mit Komplexverbindungen, die das Trinatriumsalz des Tris(m-sulfophenyl)phosphans enthalten, ist man jedoch in der Lage, Katalysatorsysteme herzustellen, die bei der Hydroformylierung von Olefinen Anwendung finden (DE-OS-38 40 600) Gegenüber anderen bekannten Katalysatoren, die für die vorgenannte Reaktion eingesetzt werden, haben sie den Vorteil, in Wasser löslich zu sein. Man kann daher die Hydroformylierung in einem aus einer wäßrigen und einer organischen Phase bestehenden heterogenem Reaktionsmedium (Zweiphasensystem) durchführen, wie es in der DE-OS-38 40 600 beschrieben ist

Der Vorteil eines solchen Verfahrens liegt darin, daß das Endprodukt durch einfache Phasentrennung vom wasserlöslichen Katalysator abgetrennt werden kann. Darüber hinaus kann auf diese Weise der Edelmetallkatalysator nahezu verlustfrei wiedergewonnen oder aber in die Synthesestufe zurückgeführt werden (DE-OS- 26 27 354)

Zur Herstellung von wasserlöslichen Katalysatorsystemen sind phosphorhaltige Verbindungen von besonderem Interesse. Beispiele hierfür sind etwa Katalysatoren aus Palladium-Komplexen mit anionischen Phosphanen als Liganden.

Kationische phosphanhaltige Liganden sind bisher nur wenig untersucht worden, obgleich sie ebenfalls einen günstigen Einfluß auf die vorgenannten Reaktionen ausüben sollten.

Seit einiger Zeit werden nun auch bestimmte Guanidiniumphosphane als Katalysatorliganden für Palladium-katalysierte C-C-Verknüpfungsreaktionen, etwa bei der Heck-Reaktion eingesetzt. Damit ist es möglich, solche Reaktionen vorteilhaft in wäßrigen Systemen durchzuführen.

Die Synthese von Guanidiniumphosphanen erfolgt beispielsweise durch die Umsetzung von 3-Aminopropyldiphenylphosphan oder Bis(3-aminopropyl)phenylphosphan mit 1-H-Pyrazol-1-carboxamidinhydrochlorid [H. Dibowski et al., Tetrahedron Vol 51. No. 8 (1995) 2325-2330].

Nach diesem Verfahren erhält man 3-Guanidinopropyldiphenylphosphan und Bis(3-guanidinopropyl)phenylphosphan. Die vorgenannten Verbindungen lassen sich als Katalysatorliganden bei C-C-Verknüpfungsreaktionen, etwa bei der Heck-Reaktion, einsetzen.

Es besteht jedoch zunehmend Bedarf an weiteren phosphorhaltigen Liganden, die bei der Heck-Reaktion und anderen organometallischen Synthesen oder Reaktionen eingesetzt werden können.

Von Interesse sind hierbei insbesondere Guanidiniumphosphane, bei denen der Guanidinium-Substituent direkt an die Phenylgruppe gebunden ist Von solchen Verbindungen verspricht man sich eine besonders günstige Wirkung auf C-C-Verknüpfungsreaktionen und anderen.

Es ist daher Aufgabe der vorliegenden Erfindung, Guanidinium-substituierte Verbindungen zur Verfügung zu stellen, bei denen der Guanidinium-Substituent direkt an die Phenylgruppe gebunden ist und die bei C-C-Verknüpfungsreaktionen, etwa bei der Reaktion nach Heck, mit besonders gutem Erfolg eingesetzt werden können.

Diese Aufgabe wird gelöst durch Guanidiniumphosphane der allgemeinen Formel I, 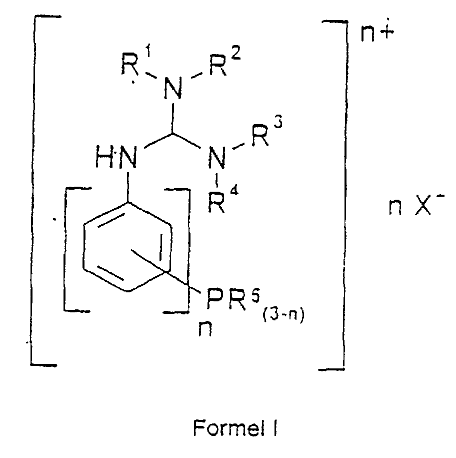 in der
n eine ganze Zahl von 1 bis 3,
X, Cl, Br, I oder PF₆,
R¹ und R² gleich Wasserstoff und R³ und R⁴ gleich Methyl oder R¹ und R² gleich Methyl und R³ und R⁴ gleich Wasserstoff und R⁵ eine Phenylgruppe
bedeutet und sich der Guanidinium-Substituent in meta- oder para-Position zum P-Atom befindet.

Die Aufgabe wird ebenfalls gelöst durch Guanidiniumphosphane der allgemeinen Formel II 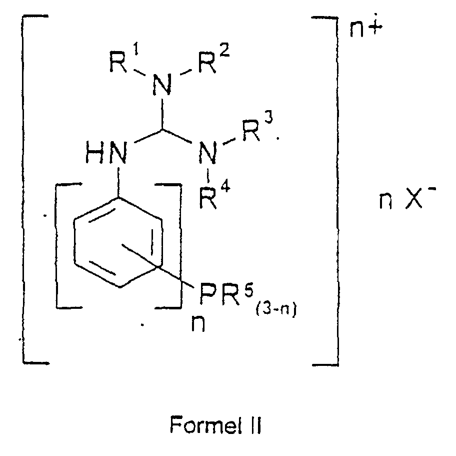 in der
n eine ganze Zahl von 1 bis 2
X, Cl, Br, I oder PF₆,
R¹, R², R³, R⁴ gleich oder verschieden sind und eine C₁ bis C₆-Alkylgruppe oder Wasserstoff, mit Ausnahme von R¹ und R² gleich Wasserstoff und R³ und R⁴ gleich Methyl oder R¹ und R² gleich Methyl und R³ und R⁴ gleich Wasserstoff, und R⁵ eine Phenylgruppe
bedeutet und sich der Guanidinium-Substituent in meta- oder para-Position zum P-Atom befindet.

Die Erfindung betrifft ebenfalls ein Verfahren zur Herstellung von Guanidiniumphosphanen der allgemeinen Formel I, das dadurch gekennzeichnet ist, daß man N-Aminophenylphosphane der allgemeinen Formel III 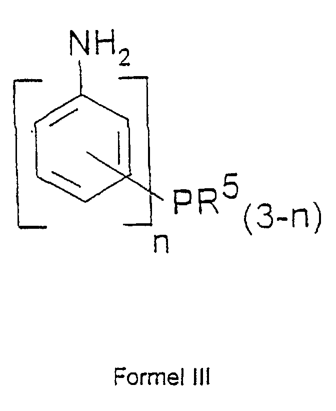 in der n und R⁵ die gleiche Bedeutung wie in Formel I haben, mit Dimethylcyanamid zu Guanidiniumphosphanen der allgemeinen Formel I umsetzt. Die Herstellung von N-Aminophenylphosphanen ist z.B. aus J.Organomet. Chem. 1996, 522, 69, Phosphorus 1997, 1, 187 oder aus Chem. Ber. 1971, 104, 1722, bekannt.

Bevorzugt setzt man die N-Aminophenylphosphane der allgemeinen Formel III zunächst mit äquimolaren Mengen an etherischer oder wäßriger HCl-Lösung zu den HCl-Addukten der allgemeinen Formel IV 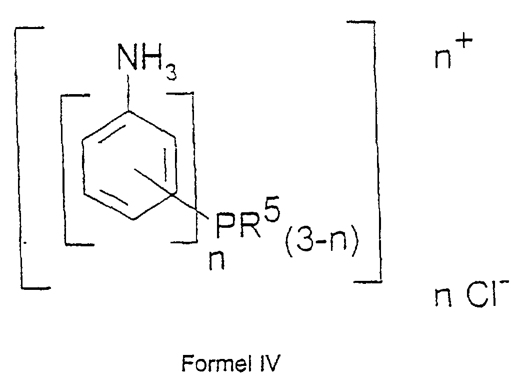 in der n und R⁵ die gleiche Bedeutung wie in Formel I haben, um und führt dann den Umsetzungsschritt mit dem Dimethylcyandiamid durch.

Die Erfindung betrifft ebenfalls ein Verfahren zur Herstellung von Guanidiniumphosphanen der allgemeinen Formel I, mit Ausnahme von n = 3, oder II, das dadurch gekennzeichnet ist, daß man primäre und sekundäre Phosphane R⁵₃₋ₙPHₙ(n = 1 oder 2) mit meta- oder para-lodphenylguanidinen der allgemeinen Formel V 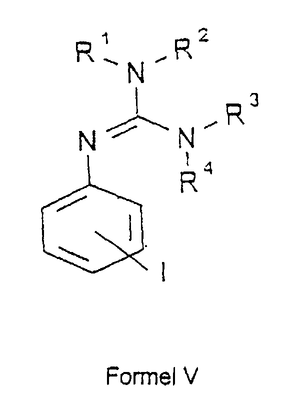 in der
R¹, R², R³, R⁴ die gleiche Bedeutung wie in Formel I oder II haben und das Iod-Atom sich in meta- oder para-Position zum Guanidin-Rest befindet, umsetzt. Aus C. Ferri, Reaktionen der organischen Synthese, Georg Thieme Verlag, Stuttgart, 1978, Synthesis 1988, 460 oder Y. Yamomoto, S. Kojima, The Chemistry of Amidines and Imidates, Bd. 2, Herausgeb. S. Patai, Z. Rappoport, John Wiley & Sons, New York 1991, Seite 491, ist bekannt, daß sich mit Alkylgruppen substituierte Cyanamide mit Aminen oder substituierten Anilinen zu substituierten Guanidinien umsetzen lassen.

Bevorzugt werden als Lösungsmittel Acetonitril, Dimethylacetamid, Ether und/oder Kohlenwasserstoffe eingesetzt.

Als Katalysatoren werden hierfür bevorzugt Palladium-(II)-acetat, Palladium-(II)-halogenid-phosphankomplexe, Palladium-(O)-olefinkomplexe, Palladium-(O)-phosphankomplexe sowie feinverteiltes metallisches Palladium eingesetzt.

Die Erfindung betrifft ebenfalls die Verwendung der Verbindungen der Formel I oder II zur Herstellung von Katalysatorliganden für Kohlenstoff-Kohlenstoff-Verknüpfungsreaktionen.

Die Erfindung wird durch die nachstehenden Beispiele, in denen die erfindungsgemäßen Verbindungen in Form ihrer Chloride, Bromide, lodide und Hexafluorophosphate hergestellt werden, erläutert.

### Beispiel 1

Zu einer Lösung von 2,25 g (8,1 mmol) Diphenyl-(3-aminophenyl)phosphan in 20 ml Dichlormethan werden 3,5 ml etherischer HCI-Lösung (1,65 N) unter Rühren zugegeben. Das Lösungsmittel wird abdestilliert und der Rückstand mittels Zugabe einer kleinen Menge Diethylether auskristallisiert und anschließend im Vakuum getrocknet.

Man erhält 2,48 g Diphenyl-(3-ammoniumphenyl)phosphan-chlorid, entsprechend einer Ausbeute von 98 %.

Das vorgenannte Produkt (2,48 g; 7,9 mmol) wird zu einem Überschuß Dimethylcyanamid (2,90 g; 41,4 mmol) gegeben und bei 110°C für 12 Stunden gerührt. Um den Überschuß an Dimethylcyanamid zu entfernen, extrahiert man die hochviskose Reaktionsmischung mit 30 ml Ether und erhält als cremefarbenen Feststoff 2,78 g Diphenyl-(3-(N,N-dimethylguanidinium)phenyl)phosphan-chlorid (Ausbeute: 92 %).

### Beispiel 2

Zu einer Lösung von 1,26 g (4,3 mmol) Phenyl-bis-(3-aminophenyl)phosphan in 20 ml Tetrahydrofuran werden 5,1 ml etherischer HCI-Lösung (1,65 N) unter Rühren zugegeben. Man fällt als weißes Produkt 1,53 g Phenyl-bis-(3-ammoniophenyl)phosphan-dichlorid aus (Ausbeute: 97 %).

Das vorgenannte Produkt (1,53 g; 4,2 mmol) wird zu einem Überschuß Dimethylcyanamid (1,20 g; 17,1 mmol) gegeben und bei 110°C für 4 Stunden gerührt. Um den Überschuß an Dimethylcyanamid zu entfernen, extrahiert man die hochviskose Reaktionsmischung mit 30 ml Ether und erhält als cremefarbenen Feststoff 1,96 g Phenyl-bis-(3-N,N-dimethylguanidino)phenyl)-phosphan-dichlorid (Ausbeute: 92 %).

### Beispiel 3

Eine wäßrige Lösung von 3,04 g (9,90 mmol) Tris-(3-aminophenyl)-phosphan in 100 ml Wasser wurden mit 13,5 ml Salzsäure (2 N) behandelt und die klare Lösung bei Raumtemperatur 30 Minuten gerührt. Das Lösungsmittel wurde bei 60°C unter vermindertem Druck abdestilliert und man erhält 3,21 g Tris-(3-ammoniophenyl)-phosphan-trichlorid als farblosen Feststoff (Ausbeute: 78 %).

Das vorgenannte Produkt (1,90 g; 4,6 mmol) wird zu einem Überschuß Dimethylcyanamid (4,36 g; 62,2 mmol) gegeben und bei 110°C für 12 Stunden gerührt. Um den Überschuß an Dimethylcyanamid zu entfernen, extrahiert man die hochviskose Reaktionsmischung mit 30 ml Ether und erhält als cremefarbenen Feststoff 2,79 g Tris-[3-(N,N-dimethylguanidinium)phenyl]-phosphan-trichlorid (Ausbeute: 97 %).

### Beispiel 4

46,00 g (0,21 mol) 3-lodanilin wurden mit 100 ml 15 %iger Salzsäure versetzt. Das dabei gebildete 3-Iodaniliniumhydrochlorid wurde abgesaugt, aus Wasser umkristillisiert und im Vakuum getrocknet (Ausbeute: 52,57 g = 98 %). Die gesamte Menge des Aniliniumsalzes wurde mit 14,42 g (0,205 mol) Dimethylcyanamid vermischt und im Ölbad 10 Minuten auf 130°C erhitzt. Nach Abklingen der Reaktion wurde das Reaktionsgemisch abgekühlt, mit 100 ml Wasser versetzt und die wasserlöslichen Teile abfiltriert. Die wäßrige Lösung wurde zweimal mit je 100 ml Diethylether extrahiert, mit KOH auf einen pH-Wert von 10 bis 12 eingestellt und anschließend dreimal mit 100 ml Dichlormethan extrahiert. Aus den über Magnesiumsulfat getrockneten CH₂Cl₂-Extrakten wurde das Lösungsmittel im Vakuum abgezogen. Es verblieben 48,2 g N'-(3-Iodphenyl)-N,N-dimethylguanidin als farbloser Feststoff (Ausbeute: 81 %).

Zur Lösung des vorgenannten Produkts (32,10 g; 0,111 mol) und 6,16 g (0,056 mol) PhPH₂ in 150 ml Acetonitril wurden nach sorgfältigem Entgasen und Sättigen der Lösung mit Stickstoff unter kräftigem Rühren 0,25 g (0,22 mmol) Pd(Ph₃P)₄ (0,2 mol%) gegeben. Die Reaktionsmischung wurde 40 h unter Rückfluß erhitzt und anschließend das Lösungsmittel im Vakuum (20°C, 0,2 mbar) abgezogen. Dabei verblieben 37,6 g Phenyl-bis-(N,N'-dimethylguanidinium)phenyl-phosphan-diiodid als cremefarbener Rückstand (Ausbeute: 97%).

### Beispiel 5

20,0 g 4-Iodanilinhydrochlorid (78,3 mmol) und 3,29 g (78,3 mmol) Cyanamid wurden feingemahlen und innig miteinander vermischt. Die Mischung wurde bei 140°C zusammengeschmolzen und ca. 3 Minuten bei dieser Temperatur belassen. Unter Aufschäumen und Dunkelfärbung bildet sich das Guanidiniumsalz [4-I-C₆H₄-NH-C(NH₂)₂]Cl. Der schwarze Schmelzkuchen wurde nach dem Erkalten in 200 ml heißem (ca. 80°C) Wasser aufgenommen und die erhaltene Lösung fünfmal mit je 50 ml Ether extrahiert. Die wäßrige Phase wurde anschließend mit konz. KOH auf pH = 10 bis 11 eingestellt. Das auskristallisierende 4-Iodphenyl-guanidin (16,7 g) wurde abgesaugt, mit insgesamt 200 ml Wasser gewaschen und im Vakuum (20°C, 0.01 mbar) getrocknet (Ausbeute: 16.7 g 82 %).

Das vorgenannte Produkt (5.00 g; 19.2 mmol) wurde in 30 ml Dimethylacetamid (DMA) gelöst und die Lösung sorgfältig entgast Anschließend wurden unter Luftausschluß 3,57 g (19,2 mmol) Ph₂PH und 1.9 ml einer 5.10⁻³ m Lösung von Palladium(II)acetat (0,05 mol%) in DMA zugegeben und das Reaktionsgemisch 6 h auf 130°C erhitzt Nach Ablauf der Umsetzung wurde das Reaktionsgemisch in 100 ml Wasser gegossen und mit 4,60 g (25.0 mmol) KPF₆ versetzt und auf 50 °C erhitzt. Der dabei ausgefallene Niederschlag (Hexafluorphosphat) wurde abfiltriert mehrmals mit je 20 ml Wasser gewaschen und anschließend in 20 ml Ethanol gelöst. Durch Zugabe von 2.8 g KOH (ca. 88 %ig, 43.9 mmol) zu dieser Lösung wurde die Guanidinium-Base freigesetzt und 30 ml CH₂Cl₂ extrahiert. Die organische Phase wurde dreimal mit je 10 ml Wasser gewaschen, mit Na₂SO₄ getrocknet und im Vakuum eingeengt. Der verbleibende Rückstand wurde bei 80 °C in 20 ml 1,0 m HBr aufgenommen, abfiltriert und das Filtrat im Vakuum (30 °C. 0.02 mbar) eingeengt. Man erhielt 5.0 g Diphenyl-(4-guanidinium-phenyl)-phosphan-bromid als cremefarbenen Feststoff (Ausbeute: 65 %).

### Beispiel 6 Diskontinuierliche Hydroformylierung von n-Hexen-1

In einem 0.2 I Autoklaven werden, unter strengem Sauerstoffausschluß, 105 g einer Katalysatorlösung mit 335 ppm Rh (33 mg) in Form von Rhodiumacetat und 32 mmol TPPtris-Guanidiniumsalz (697 mmol P'''/kg) vorgelegt. Bei 125 °C und 25 bar Synthesegasdruck (CO · H₂ = 1 · 1) wird 3 Stunden präformiert. Nach Abkühlung und Entspannung des Autoklaven, wird die Katalysatorlösung ausgebaut. Ein Teil der Katalysatorlösung wird analysiert: 335 ppm Rh; 293 mmol P'''/kg; 319 mmol P ges/kg.

79.5 g der präformierten Katalysatorlösung werden. unter strengem Sauerstoffausschluß. zusammen mit 40.0 g n-Hexen- 1 (Verhältnis wäßrige zu organischer Phase 2 : 1) in den Autoklaven eingebaut. Unter den obengenannten Bedingungen läßt man 3 Stunden reagieren und entspannt den Autoklaven. nachdem er auf Raumtemperatur abgekühlt ist. Nach gaschromatographischer Analyse enthält die organische Phase vom Reaktionsgemisch 63 % Hexen, 35 % Heptanale und 0.7 % Nachlauf. Die Heptanale bestehen zu 89 % aus n-Heptanal und 11 % 2-Methyl-hexanal.
Als weiteres wurde der Katalysatorlösung 4 Gew -% PEG 400 zugesetzt und unter gleichen Bedingungen wie zuvor verfahren. Nach gaschromatographischer Analyse enthält die organische Phase vom Reaktionsgemisch 66 % Hexen, 33 % Heptanale und 0.1 % Nachlauf. Die Heptanale bestehen zu 90 % aus n-Heptanal und 10 % 2-Methyl-hexanal.

Im Vergleich zum Guanidinium-Liganden ergaben Versuche mit einer TPPTS-Na-Salz-Lösung, unter gleichen Versuchsbedingungen, folgende Werte der organischen Phase: 75 % Hexen, 25 % Heptanale und 0.3 % Nachlauf. Die Heptanale bestehen zu 98 % aus n-Heptanal und 2 % 2-Methyl-hexanal.

## Patentansprüche

1. Guanidiniumphosphane der allgemeinen Formel I 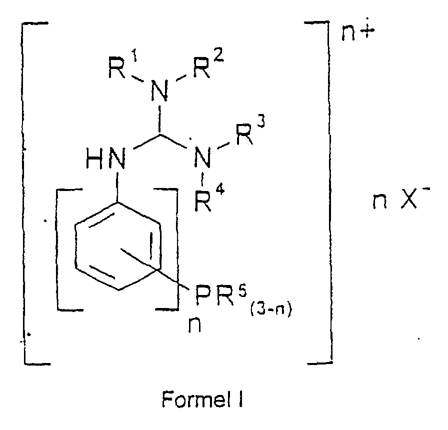 in der
n eine ganze Zahl von 1 bis 3
X, Cl, Br, I oder PF₆,
R¹ und R² gleich Wasserstoff und R³ und R⁴ gleich Methyl oder R¹ und R² gleich Methyl und R³ und R⁴ gleich Wasserstoff und R⁵ eine Phenylgruppe bedeutet, und sich der Guanidinium-Substituent in meta- oder para-Position zum P-Atom befindet.

2. Guanidiniumphosphane der allgemeinen Formel II 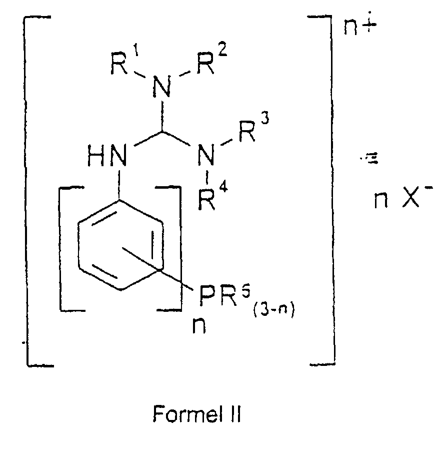 in der
n eine ganze Zahl von 1 bis 2
X, Cl, Br, I oder PF₆,
R¹, R², R³, R⁴ gleich oder verschieden sind und eine C₁- bis C₆-Alkylgruppe oder Wasserstoff, mit Ausnahme von R¹ und R² gleich Wasserstoff und R³ und
R⁴ gleich Methyl oder R¹ und R² gleich Methyl und R³ und R⁴ gleich Wasserstoff, und R⁵ eine Phenylgruppe
bedeutet, und sich der Guanidinium-Substituent in meta- oder para-Position zum P-Atom befindet.

3. Verfahren zur Herstellung von Guanidiniumphosphanen der allgemeinen Formel I, **dadurch gekennzeichnet, daß** man N-Aminophenylphosphane der allgemeinen Formel III 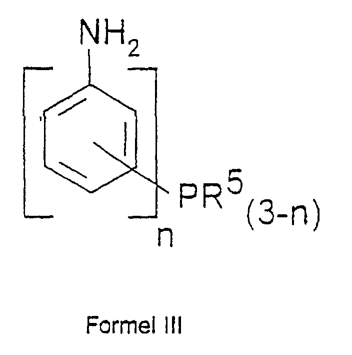 in der n und R⁵ die gleiche Bedeutung wie in Formel I haben, mit Dimethylcyanamid zu Guanidiniumphosphanen der allgemeinen Formel I umsetzt.

4. Verfahren nach Anspruch 3, dadurch gekeknnzeichent, daß man die N-Aminophenylphosphane der allgemeinen Formel III zunächst mit äquimolaren Mengen an etherischer oder wäßriger HCI-Lösung zu den HCI-Addukten der allgemeinen Formel IV 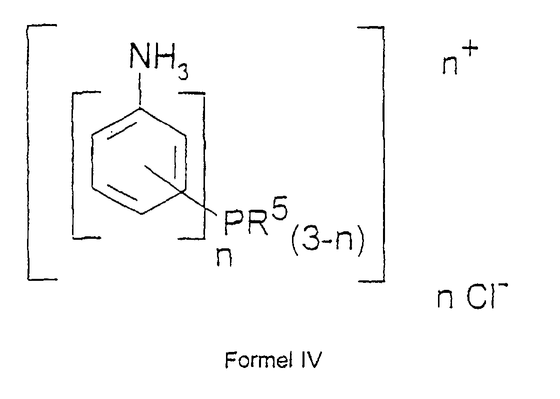 in der n und R⁵ die gleiche Bedeutung wie in Formel I haben, umsetzt und dann der Umsetzungsschritt mit dem Dimethylcyanamid erfolgt.

5. Verfahren zur Herstellung von Guanidiniumphosphanen der allgemeinen Formel I, mit Ausnahme von n = 3 oder II, **dadurch gekennzeichnet, daß** man primäre und sekundäre Phosphane R⁵₃₋ₙPHₙ(n=1 oder 2) mit meta- oder para-lodphenylguanidinen der allgemeinen Formel V 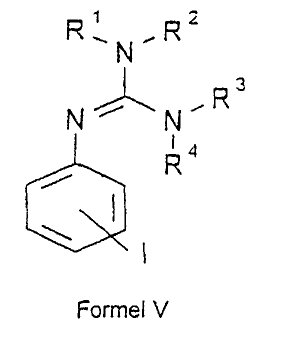 in der
R¹, R², R³, R⁴ die gleiche Bedeutung wie in Formel I oder II haben und R⁵ eine Phenylgruppe bedeuten und das Iod-Atom sich in meta- oder para-Position zum Guanidin-Rest befindet, umsetzt.

6. Verfahren nach einem oder mehreren der Ansprüche 3 bis 5, **dadurch gekennzeichnet, daß** als Lösungsmittel Acetonitril, Dimethylacetamid, Ether und/oder Kohlenwasserstoffe eingesetzt werden.

7. Verfahren nach einem oder mehreren der Ansprüche 3 bis 6, **dadurch gekennzeichnet, daß** als Katalysatoren bevorzugt Palladium-(II)acetat, Palladium-(II)-halogenid-phosphankomplexe, Palldium-(O)-olefinkomplexe, Palladium-(O)-phosphankomplexe sowie feinverteiltes metallisches Palladium eingesetzt werden.

8. Verwendung der Verbindungen der Formel I oder II zur Herstellung von Katalysatorliganden für Kohlenstoff-Kohlenstoff-Verknüpfungsreaktionen.

## Claims

1. A guanidinium phosphine of the formula I, 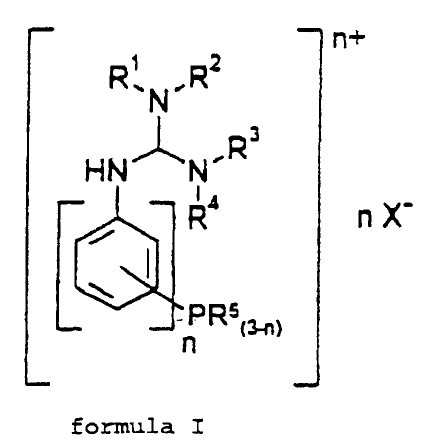 where
n is an integer from 1 to 3,
X is Cl, Br, I or PF₆,
R¹ and R² are hydrogen and R³ and R⁴ are methyl or R¹ and R² are methyl and R³ and R⁴ are hydrogen and R⁵ is a phenyl group
and the guanidinium substituent is located in the meta or para position relative to the P atom.

2. A guanidinium phosphine of the formula II 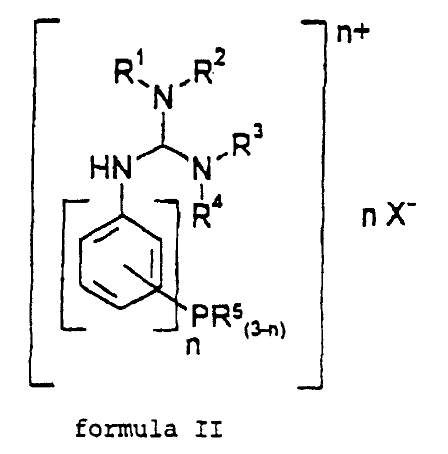 where
n is 1 or 2,
X is Cl, Br, I or PF₆,
R¹, R², R³, R⁴ are identical or different and are each a C₁-C₆-alkyl group or hydrogen, with the exception of R¹ and R² being hydrogen and R³ and R⁴ being methyl or R¹ and R² being methyl and R³ and R⁴ being hydrogen, and R⁵ is a phenyl group
and the guanidinium substituent is located in the meta or para position relative to the P atom.

3. A process for preparing guanidinium phosphines of the formula I, which comprises reacting N-aminophenylphosphines of the formula III 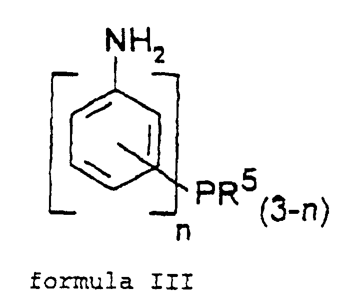 where n and R⁵ are as defined in formula I, with dimethylcyanamide to give guanidinium phosphines of the formula I.

4. The process as claimed in claim 3 wherein the N-aminophenylphosphines of the formula III are first reacted with equimolar amounts of a solution of HCl in ether or water to form the HCl adducts of the formula IV 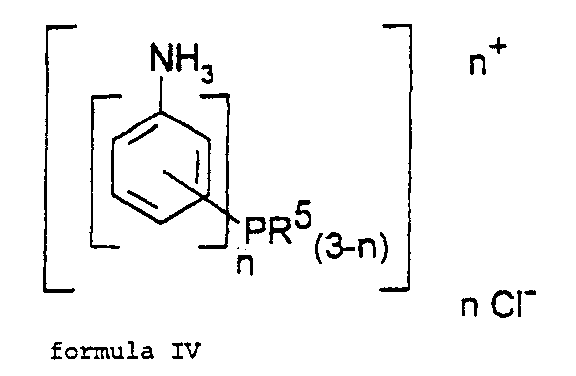 where n and R⁵ are as defined in formula I, and the reaction step with the dimethylcyanamide is then carried out.

5. A process for preparing guanidinium phosphines of the formula I, with the exception of n = 3, or II, which comprises reacting primary or secondary phosphines R⁵₃₋ₙPHₙ (n = 1 or 2) with meta- or paraiodophenylguanidines of the formula V, 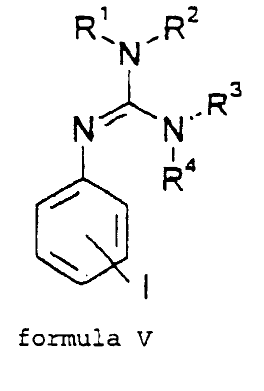 where
R¹, R², R³, R⁴ are as defined in formula I or II and R⁵ is a phenyl group and the iodine atom is located in the meta or para position relative to the guanidine group.

6. A process as claimed in one or more of claims 3 to 5, wherein acetonitrile, dimethylacetamide, ether and/or hydrocarbons are used as solvent.

7. A process as claimed in one or more of claims 3 to 6, wherein palladium(II) acetate, palladium(II) halide-phosphine complexes, palladium(0)-olefin complexes, palladium(0)-phosphine complexes and finely divided metallic palladium are preferably used as catalysts.

8. The use of compounds of the formula I or II for preparing catalyst ligands for carbon-carbon linkage reactions.

## Revendications

1. Guanidiniumphosphanes de formule générale I 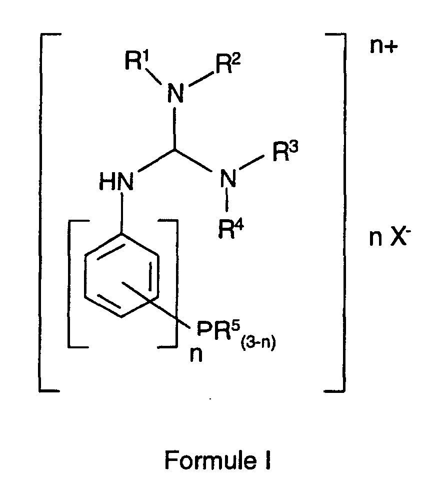 où
n représente un nombre entier de 1 à 3,
X représente Cl, Br, I ou PF₆,
R¹ et R² représentent l'hydrogène et R³ et R⁴ représentent méthyle ou bien R¹ et R² représentent méthyle et R³ et R₄ représentent l'hydrogène et R⁵ représente un groupe phényle, et le substituant guanidinium se trouve en position méta- ou para- par rapport à l'atome P.

2. Guanidiniumphosphanes de formule générale II 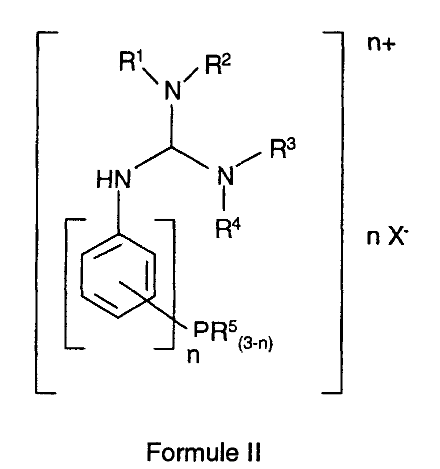 où
n représente un nombre entier de 1 à 2,
X représente Cl, Br, I ou PF₆,
R¹, R², R³, R⁴ sont identiques ou différents et représentent un groupe alkyle en C₁ à C₆ ou l'hydrogène, à l'exception de R¹ et R² représentant l'hydrogène et R³ et R⁴ représentant méthyle, ou R¹ et R² représentant méthyle et R³ et R⁴ représentant l'hydrogène, et R⁵ représente un groupe phényle, et le substituant guanidinium se trouve en position méta- ou para- par rapport à l'atome P.

3. Procédé de préparation de guanidiniumphosphanes de formule générale I, **caractérisé en ce que** l'on fait réagir des N-aminophénylphosphanes de formule générale III 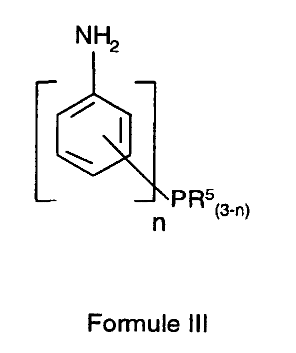 où
n et R⁵ ont la même signification que dans la formule I, avec le diméthylcyanamide pour former des guanidiniumphosphanes de formule générale I.

4. Procédé selon la revendication 3, **caractérisé en ce que** l'on fait réagir d'abord les N-aminophénylphosphanes de formule générale III avec des quantités équimolaires de solution éthérée ou aqueuse de HCI pour former les produits d'addition de HCI de formule générale IV 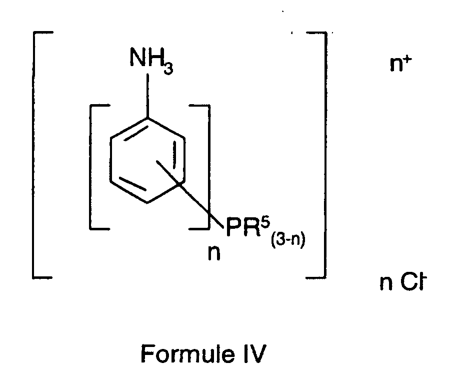 où n et R⁵ ont la même signification que dans la formule I, après quoi on réalise l'étape de réaction avec le diméthylcyanamide.

5. Procédé de préparation de uanidiniumphosphanes de formule générale I, à l'exception de n = 3, ou II, **caractérisé en ce que** l'on fait réagir des phosphanes primaires ou secondaires R⁵₃₋ₙPHₙ(n = 1 ou 2) avec des méta- ou para-iodophénylguanidines de formule générale V 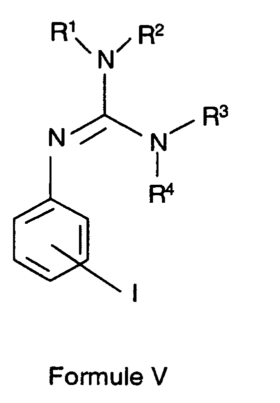 où
R¹, R², R³, R⁴ ont la même signification que dans la formule I ou II et R⁵ représente un groupe phényle et l'atome d'iode se trouve en position méta- ou para- par rapport au reste guanidine.

6. Procédé selon une ou plusieurs des revendications 3 à 5, **caractérisé en ce que** l'on utilise comme solvant l'acétronitrile, le diméthylacétamide, un éther et/ou des hydrocarbures.

7. Procédé selon une ou plusieurs des revendications 3 à 6, **caractérisé en ce que** l'on utilise comme catalyseurs de préférence l'acétate de palladium-(II), des complexes halogénure de palladium-(II)-phosphane, des complexes palladium-(O)-oléfine, des complexes palladium-(O)-phosphane ainsi que du palladium métallique finement divisé.

8. Utilisation de composés de formule de I ou II pour la production de ligands de catalyseurs pour des réactions de liaison carbone-carbone.
